# EUROPÄISCHE PATENTSCHRIFT

(11) **EP 1 393 994 B1**
(45) Veröffentlichungstag und Bekanntmachung des Hinweises auf die Patenterteilung: **19.01.2005**
(21) Anmeldenummer: 03017882.6
(22) Anmeldetag: 05.08.2003
(51) Int. Cl.: B60R 21/20

(54) **Airbagabdeckung mit Verstärkung aus einem Kunststoffleichtbauteil**
Air bag cover comprising a reinforcement of lightweight plastic
Couvercle de module de sac gonflable comprenant un renforcement allégé en plastique

(30) Priorität: 22.08.2002 DE 10239261
(43) Veröffentlichungstag der Anmeldung: 03.03.2004
(73) Patentinhaber: Peguform GmbH & Co. KG, 79268 Bötzingen (DE)
(72) Erfinder: Knöller, Ralph, 79331 Teningen (DE); Popp, Gerald, 79244 Münstertal (DE); Thalgott, Didier, 67150 Gerstheim (FR)

(56) Entgegenhaltungen:
- EP-A- 0 582 443
- WO-A-97/03866
- US-A- 5 096 221

## Beschreibung

Die Erfindung betrifft ein kunststoff bauteil gemäß dem Oberbegriff des Anspruchs 1 (siehe EP-A-0 582 443), insbesondere ein Einbauteil für Kraftfahrzeuge, insbesondere für Instrumententafeln, Seitenverkleidungen oder Holmverkleidungen, welches als Sicherheitseinrichtung zur Vermeidung von Insassenverletzungen bei einem Aufprall dient. Dieses Einbauteil besteht aus einem unsichtbar hinter der Innenverkleidung angebrachtem Airbag mit einer Airbagabdeckung. Die Airbagabdeckung ist einem als Schusskanal fungierenden Austrittsbereich zugeordnet. Bei Entfaltung eines Luftsackes öffnet sich mindestens eine Schwächungszone, wobei ein- oder beidseitig der Schwächungszone gelegene Bereiche der Airbagabdeckung von einem austretenden Airbag den Austrittsweg freigebend bewegbar sind und nach Entfaltung des Airbags mit dem Einbauteil verbunden bleiben. Insbesondere handelt es sich um eine Abdeckung mit mindestens einer Schwächungszone für einen Airbag oder Luftsack, die auf der Sichtseite mit freiem Auge nicht erkennbar ist.

Aus dem Stand der Technik sind sowohl Ausführungen von Schwächungszonen bekannt, die auf der Sichtseite einer Fahrzeuginnenraumverkleidung sichtbar sind, also eine klar definierte Kontur besitzen als auch solche Ausführungen, in denen die Schwächungszonen für das freie Auge nicht auf der Oberfläche erkennbar sind.

Diese Abdeckungen müssen daher auf der unsichtbaren Seite entlang einer Sollbruchlinie geschwächt werden.

So wird in Dokument US6131945 das Problem angesprochen, dass es bei der Auslösung des Airbags nicht zu definiertem und reproduzierbaren Auslöseverhalten kommt, welches aber aus Sicherheitsgründen von den Fahrzeugherstellern gefordert wird. Die in US6131945 beschriebene Lösung dieses Problems erfordert den Einsatz eines Metalleinlegers, welcher unter dem Druck des sich auslösenden Airbags die Öffnungskräfte in die Abdeckung einleitet und die Klappe so gezielt öffnet, dass es weder an der Abdeckung noch in dem angrenzenden Bereich zu Bruchstücken oder Partikelflug kommen kann. Dieser Metalleinleger ist nicht direkt am Kunststoffträger montiert, sondern von der Airbagabdeckung getrennt und mit einem eigenen Verbindungsglied auf dem Schusskanal oder einem Fahrzeugquerträger montiert. Der Kunststoffträger ist im Bereich der Abdeckung mit einer Schicht aus PVC - beschichteten Nylon ausgestattet, welche mittels Nieten mit dem Kunststoffträger verbunden ist. Diese Nieten werden durch Erwärmung der PVC-Nylonschicht und des Kunststoffträgers in einem zusätzlichen Verarbeitungsschritt eingebracht. Einfachere Ausführungsformen, wie sie in US6131945 und US5941558 dargestellt werden, sind nur bei sichtbaren Sollbruchlinien realisierbar.

Die dargestellte Konstruktion löst das Problem des Partikelfluges oder von Schichten, die ablösen, erfordert aber eine Vielzahl von Prozessschritten, welche im Detail folgende Schritte umfassen: Einlage einer Dekorschicht in eine Form, Hinterschäumen der Dekorschicht und einer Trägerschicht, Positionierung einer PVC-Nylonschicht und eventuell vorläufige Verklebung derselben mit der Schaumschicht, Aufheizen der Niete, Anbringen der Niete auf die PVC-Nylonschicht und die Trägerschicht, Formen und

Zuschneiden eines Metalleinlegers, Vorformen des Metalleinlegers, Positionieren des Metalleinlegers und der PVC-Nylonschicht und Verbindung der so positionierten Schichten mit einem Fahrzeugquerträger oder dem Airbagschusskanal durch eine Nietverbindung oder eine Schraubverbindung.

Nach dem in den US-Patentschriften dargestellten Konzept sind zudem mindestens 3 verschiedene Materialien erforderlich, ein Verbund aus Kunststoffen für die Dekorschicht, die Schaumschicht und die Trägerschicht, eine Schicht aus PVC-Nylon und ein Metalleinleger. Diese Materialkombination gestaltet das Recycling des gesamten Bauteils schwierig, weil die verschiedenen Materialien erst einmal getrennt werden müssen, was zumindest einen Teil der oben beschriebenen Prozessschritte in umgekehrter Reihenfolge erforderlich macht.

Eine weitere Lösung wird in der Patentschrift US5398959 offenbart. Die Trägerschicht wird im Bereich der Airbagabdeckung als strukturbildende Trägerschicht ausgebildet. Die Trägerschicht besteht aus Polystyrol, aus einem Strukturkunststoff oder Metall. Die Airbagabdeckung ist sichtbar und kann somit als vollkommen separates Bauteil von der Instrumententafel getrennt sein und mit derselben nur über rechts- und linksseitig angeordnete Gewebe verbunden sein. Durch den Druck des sich entfaltenden Airbags wird die Abdeckung wie ein Deckel angehoben und der Airbag soll sich durch die sich ergebende Öffnung direkt in Richtung des Insassen entfalten. Weil die Abdeckung eine Hubbewegung statt einer Klappbewegung ausführt, wird die Abdeckung nicht vollständig von der Wucht des Airbags erfasst, sondern nur angestoßen, um sich nach oben und in Richtung der Windschutzscheibe zu bewegen, um den Weg des Airbags in Richtung Insassen freizugeben. Die nötigen Kräfte für diese Bewegung liegen deutlich unter den Kräften, welche erforderlich sind, um eine unsichtbare Airbagabdeckung zu öffen, da mindestens eine Materialschicht durchtrennt werden muß. Es ist daher auch nicht unbedingt erforderlich, eine Verstärkung im Sinne der Erfindung vorzusehen.

In der DE19701564A1 wird im Gegensatz zu der US5398959 eine von einer Verkleidungsstruktur abgedeckte, das heißt unsichtbare, Airbageinrichtung offenbart.

Die Hubbewegung, welche die Einsatzplatte bei Entfaltung des Airbags ausführt, leitet über eine zwischen der Innenraumverkleidung und der Einsatzplatte angeordnete Maschenlage eine Scherkraft in die Verschwächung ein, was zu einem Versagen der Innenraumverkleidung entlang des Umfangs der Einsatzplatte führt. Auf die Schichtzusammensetzung der Innenraumverkleidung wird dabei nicht genauer eingegangen, es handelt sich um eine Schaumschicht, welche von einer Deckschicht und einer Trägerschicht eingeschlossen ist. Die Einsatzplatte soll dabei aus Metall oder aus dem Kunststoffmaterial der Trägerschicht geformt sein. Die verwendeten Materialkombination ist somit beliebig. Somit wird durch keine der Druckschriften das Problem gelöst, eine unsichtbare Airbagabdeckung durch die Einleitung von Druckkräften so zu öffnen, dass es weder zu Materialablösungen, noch zu einer Behinderung des sich entfaltenden Airbags, noch zu einem nicht genau definierten Anriß und Rissfortschritt kommt. Zudem stellt die Verwendung von Metallplatten in Problem bei der Wiederverwertbarkeit der Innenraumverkleidung dar.

Ein weiterer Lösungsansatz wird in JP2002200957A offenbart. In dieser Veröffentlichung wird eine Instrumententafel (2) mit Verschwächungslinien (6) offenbart, wobei in einem dem Schusskanal entsprechenden Bereich eine hintere Platte (3) und ein hinteres Material (4) angeschweißt sind. Die hintere Platte dient der Verstärkung der Airbagklappe und wird zusammen mit dem hinteren Material (4) verschweißt. Das Material der Trägerschicht und das hintere Material durchdringen die hintere Platte bei der Verschweißung durch die Öffnungen (13) Das hintere Material wird mittels oszillierender Bewegungen unter Druck mit der Trägerschicht verschweißt. Das hintere Material dient somit zur Einbettung der Platte, welche nicht von selbst an der Trägerschicht haftet, da sie aus einem Material besteht, welches keine Verbindung mit der Trägerschicht oder dem hinteren Material eingeht, also beispielsweise aus einem Metall. (Anm. Die Bezugszeichen beziehen sich auf die Zeichnungen der JP2002200957A)

Es ist daher Aufgabe der Erfindung, mit einem neuen Materialkonzept, welches die Verwendung von einem einzigen Typ Polymer oder von leicht wieder zu verwertbaren Polymerverbundstoffen vorsieht, eine problemlose Entsorgung zu gewährleisten.

Eine weitere Aufgabe der Erfindung ist die Gewährleistung einer sicheren Krafteinleitung in den Bereich der Verschwächung oder der Verschwächungen, was durch einen festen Verbund von Kunststoffträgerschicht und einer Verstärkungsschicht aus Kunststoff, wobei ein mehrlagiger Kunststoffverbund, vorzugsweise in Sandwichbauweise zum Einsatz kommt. Die Auswahl der Sandwichstruktur erlaubt durch die in der Kernschicht vorhandene Struktur, Werte für eine Steifigkeit der Verstärkungsschicht zu erreichen, die mit der als Einlage dienenden Metallplatte vergleichbar sind. Zudem treten die Verbindungsprobleme, welche zwischen einer Metall- und einer Kunststoffschicht bestehen, mit dieser Materialkombination nicht auf. Somit kann auf das im Stand der Technik (JP 2002200957A) beschriebene Oszillationsschweißverfahren verzichtet werden.

Es ist eine weitere Aufgabe der Erfindung, eine unsichtbare Schwächungszone herzustellen, die zudem so aufreißt, dass es bei keiner der Schichten, aus denen die Fahrzeuginnenverkleidung besteht, zu Ablösungen mindestens einer der Schichten kommt. Der Riss soll in allen Schichten der Fahrzeuginnenverkleidung möglichst genau den Konturen der Verschwächung folgen. Zur Lösung dient ein kunststoff bauteil gemäß Anspruch 1. Dieses Ziel wird dadurch erreicht, dass durch den mehrlagigen Kunststoffverbund eine definierte Krafteinleitung in die Verschwächungszone oder Verschwächungszonen erfolgt. Der mehrlagige Kunststoffverbund ist dabei vorzugsweise so angeordnet, dass er der Geometrie der Abdeckung entspricht. Wenn ein Trägermaterial geringer Reißfestigkeit zum Einsatz kommt, kann sogar auf eine Verschwächung verzichtet werden.

Durch die Ausführung des Randes des Kunststoffverbundes, die mehrere Umlenkungen vorsieht, welche in einer Verschwächungszone vorhanden sein können, wird bei Auslösung des Luftsacks ein genau definierter Druck auf jeden Teil der Umlenkung ausgeübt. Das Vorhandensein lokaler Druckspitzen startet den Anriss an den Stellen der Umlenkung, die dem höchsten Druck ausgesetzt sind.

Die Verwendung von unsichtbaren Verschwächungszonen erhöht die Freiheiten für die Auswahl des Interieurdesigns. Mit der in der Erfindung vorgestellten Geometrie der Schwächungszonen, ist es einerseits möglich, unabhängig vom Schichtaufbau einen genau definierten Anriss und einen genau reproduzierbaren Rissfortschritt zu erreichen und andererseits kann man auf einen Teil der Verschwächungs- oder Perforationspunkte zumindest über einen Teil der Verschwächungszone verzichten. Ablösungen der Dekorschicht treten bei dem Verfahren nach der Lehre dieser Erfindung nicht auf. Somit kann verhindert werden, dass während der Auslösung eines Luftsacks Partikel ins Fahrzeuginnere gelangen und durch die explosionsartige Beschleunigung zu Gefährdung der Fahrzeuginsassen führen können.

Eine weitere Aufgabe der Erfindung, ist die Realisierung von Gewichtsreduktionen im Fahrzeuginnenraum. Das Kunststoffbauteil, welches als Verstärkung dient, soll dazu aus einer Wabenstruktur aufgebaut sein, welche mit optionalen Verstärkungsschichten verbunden ist.
Fig. 1 ist ein Schnitt durch eine Airbagabdeckung in einer ersten Ausführungsform
Fig. 2 ist ein Schnitt durch eine Airbagabdeckung in einer zweiten Ausführungsform
Fig. 3 ist ein Schnitt durch eine Airbagabdeckung in einer dritten Ausführungsform
Fig. 4a und Fig. 4b stellen mögliche Varianten in der Geometrie der Verschwächung und der zugehörigen Verstärkungsschicht dar
Fig. 5a bis Fig. 5d stellen weitere mögliche Varianten in der Geometrie der Verschwächungen dar
Fig. 6a und Fig. 6b stellen Variationen der Eindringtiefe der Verschwächung dar

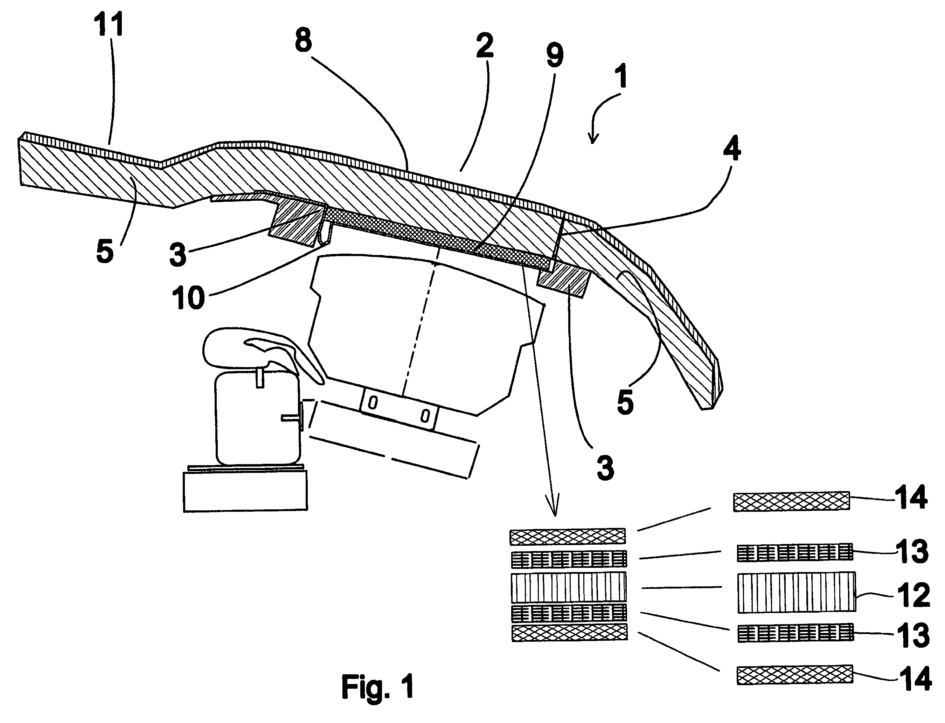

Fig. 1 ist ein Schnitt durch eine Airbagabdeckung in einer ersten Ausführungsform. Die Innenraumverkleidung 1 besteht aus einem Bereich, welcher als Abdeckung 2 für einen Airbag dient und mindestens einem weiteren Bereich 11 dem die Funktion der Abgrenzung des Fahrzeuginnenraums gegenüber der Träger- oder Rahmenkonstruktion des Fahrzeugs zukommt. Diese Innenraumverkleidung besteht in einer bevorzugten Ausführungsart aus einer Dekorschicht 8 und einer Kunststoffträgerschicht 5. Diese Kunststoffträgerschicht kann als Schaumschicht ausgebildet sein, wenn dem Wunsch nach Gewichtsreduktion Rechnung getragen werden soll. Eine derartige Schaumschicht besteht bevorzugt aus expandiertem Polypropylen, welches ausreichende Festigkeit aufweist, um als Trägermaterial zu dienen.

Im allgemeinen wird die Schaumschicht von einer Dekorschicht abgedeckt sein. Gerade im Fall der Verwendung von expandiertem Polypropylen (EPP) entsteht ein relativ grosszelliger Schaum, dessen Haftung mit der Dekorschicht, je nach eingesetzter Materialkombination nicht ausreicht, um einen dauerhaften Verbund von EPP Schicht und Dekorschicht zu gewährleisten. Daher kann die EPP-Schicht noch von einer weiteren, feinzelligen Schaumschicht bedeckt sein, die entweder als Haftvermittler oder als Zwischenlage zur Erzeugung einer weichen Oberfläche oder als Kombination derselben dient. Diese, auch als Rückenschaum bezeichnete, Schaumschicht wird gemeinsam mit der Dekorschicht, wie beispielsweise einer Folie, in ein Schäumwerkzeug eingelegt und mit EPP hinterschäumt.

Diese Zwischenschicht besteht vorzugsweise ebenfalls aus geschäumtem PP, kann aber auch andere Materialien, wie Polyethylen (PE) umfassen. Im Bereich der Airbagabdeckung 2 muss die Innenraumverkleidung verstärkt werden, um den Kräften stand zu halten, die im Fall der Auslösung des Airbags auf die Abdeckung wirken. Die Abdeckung weist als Begrenzung eine oder mehrere Verschwächungszonen 4 auf, welche als Sollbruchstelle oder Sollbruchlinie dienen. Damit sich diese Verschwächungen nicht als Folge von Stößen auf die Innenraumverkleidung abzuzeichnen beginnen oder beschädigt werden, wird die Verstärkung 9 vorgesehen, welche sich auf einem Absatz abstützt, der im Schusskanal angebracht ist. Die Verstärkung 9 hat zusätzlich die Funktion, bei Auslösung des Airbags die Krafteinleitung in die Verschwächungszone so zu steuern, dass ein definierter und reproduzierbarer Anriss und Rissfortschritt entlang der geometrischen Form der Verschwächung zustande kommt. Um diesen Anriss zu unterstützen, kann auf der Verstärkung 9 ein Fortsatz oder eine Kante ausgebildet sein, die als Schneidkante dient, wenn auf die Verstärkung 9 die Druckkraft des sich entfaltenden Airbags einwirkt. Diese Schneidkante dringt erst bei der Druckbeaufschlagung der Verschwächung in das Kunststoffträgermaterial ein. Somit kann auf eine Verschwächung des Randbereichs der Abdeckung gänzlich verzichtet werden, wenn wenig reißfeste Trägermaterialien, wie beispielsweise EPP zum Einsatz kommen. Eine weitere Funktion besteht darin, bei Öffnung der Abdeckung Materialablösungen und dem daraus resultierenden Partikelflug sicher zu vermeiden. Somit muss die Verbindung zwischen der Kunststoffträgerschicht 5 und der Verstärkung 9 ausreichende Haftung aufweisen. Eine derartige Verstärkung 9 besteht aus einer Sandwichstruktur, wobei diese aus einer Kernschicht 12 besteht, die Wabenstruktur aufweist und aus mindestens je einer die Kemschicht umgebenden Verstärkungsschicht 13, 14. Die Wabenstruktur besteht vorzugsweise aus PP, und die Verstärkungsschichten 13,14 aus faserverstärktem PP. Die Kemschicht 12 und die Verstärkungsschichten 13, 14 werden beispielsweise nach einem Verfahren hergestellt, welches in EP0649736 offenbart ist. Dieser Verbund kommt durch die Einbettung der Verstärkung in die EPP - Trägerschicht zustande. Bei einer Schichtdicke von 10mm kann die Einbettung 4 mm betragen. Diese Einbettung kann einerseits durch ein zumindest partielles Umschäumen der Verstärkung 9 und andererseits durch Verschweißen der Verstärkung mit dem EPP Träger erfolgen.

Handelt es sich bei dem Kunststoffträger um ein anderes Material als EPP, kann die Einbettung zur Herstellung des Verbundes nicht zum Ziel führen, wie beispielsweise bei Einsatz eines Spritzgussträgers. In dieser Variante wird die Verstärkung mit dem Kunststoffträger verschweißt, wenn der Kunststoffträger aus PP besteht. Durch die Verschweißung bildet die faserverstärkte PP Schicht mit einem Bereich des Kunststoffträgers einen so starken Verbund, dass Verstärkung 9 und die Kunststoffträgerschicht 5 als Klappe wirken, deren Form im wesentlichen auch nach einem Schussversuch erhalten bleibt.

Für nicht verschweißbare Materialien besteht auch die Möglichkeit der Verklebung. Insbesondere, wenn es durch die mit der Verschweißung bedingte Erwärmung zu einem Verzug des Kunststoffträgers kommt oder der Kunststoffträger eine zu geringe Dicke aufweist, um ein Schweißverfahren durchzuführen, kann es vorteilhaft sein, die Verstärkung auf den Kunststoffträger zu kleben.

Um ein Ablösen der Klappe bei Auslösung des Airbags zu verhindern, wird auf die der Innenverkleidung abgewandten Seite ein Gewebe 10 aufgepresst, aufgeschweißt oder aufgeklebt. Dieses Gewebe besteht aus kunststoffummantelten Fasern, welche im Fall der Verschweißung zumindest teilweise mit der Verstärkung 9 verschmelzen. In einer bevorzugten Ausführungsvariante kann dieses Gewebe aus Kevlar bestehen, weil sich das Kevlargewebe auch unter Belastung mit dem Airbagauslösedruck kaum dehnt. In einer weiteren Ausführungsform kann auch ein Gitter zum Einsatz kommen, beispielsweise aus faserverstärktem Material oder aus Metalldrähten.

Alternativ kann das Gewebe auch schon während des Herstellungsprozesses der Verstärkung 9 mit eingepresst werden, sodass das Gewebe entweder eine der Verstärkungsschichten 13, 14 ersetzt oder zwischen die Verstärkungsschicht oderschichten und die Wabenstruktur zwischen die Schichten 13, 14 oder als äußerste Lage auf die Schichten 13, 14 zu liegen kommt. Der Pressvorgang zur Herstellung der Verstärkung 9 erfolgt unter Anwendung von erhöhtem Druck, vorzugsweise zwischen 10 und 30 bar, und bei einer Temperatur von bis zu 200°C.

Das Gewebe 10 überragt die Verstärkung an der Stelle, an welcher die Abdeckung aufklappt. Der die Verstärkung überragende Teil des Gewebes ist mit dem Schusskanal oder mit einem Bereich auf dem Fahrzeugrahmen oder Fahrzeugträger oder mit dem auf dem Träger montierten Airbagauslösemechanismus fest verbunden.

Somit wirkt das Gewebe als Rückhaltevorrichtung für die Abdeckung, die bei der Auslösung die Wirkung einer Klappe entfaltet. In der in der Fig. 1 dargestellten Variante ist das Gewebe am Schusskanal montiert und hat zusätzlich eine Scharnierwirkung.

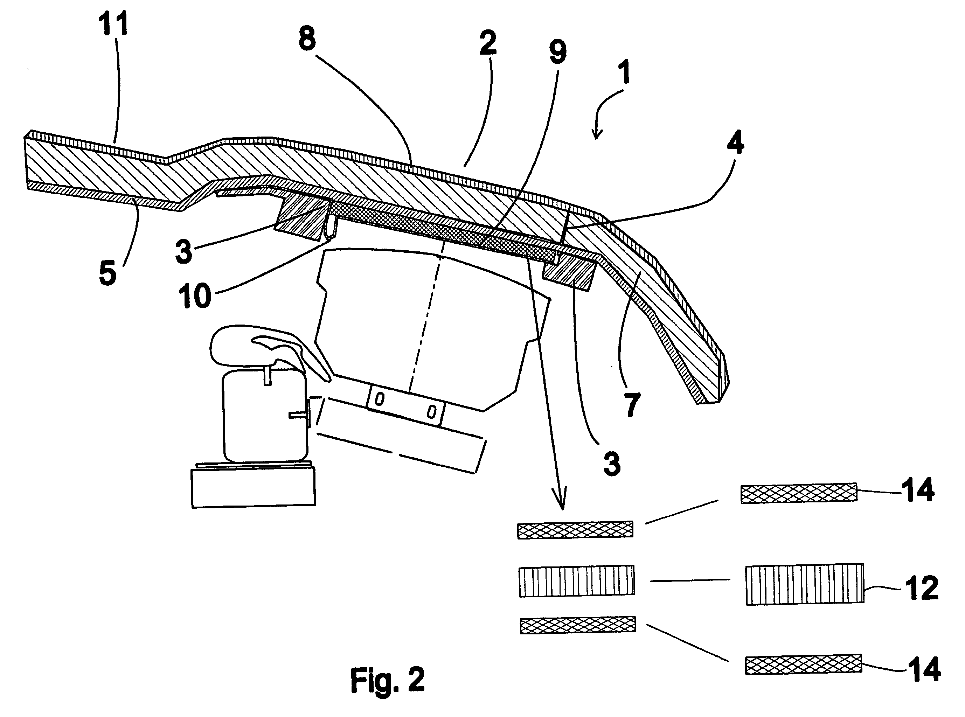

Fig. 2 ist ein Schnitt durch eine Airbagabdeckung in einer zweiten Ausführungsform. Diese Innenraumverkleidung besteht in dieser zweiten Ausführungsart aus einer Dekorschicht 8, einer Kunststoffträgerschicht 5 und einer zwischen den beiden Schichten angeordneten Schaumschicht 7.

In einer ersten Variante besteht die Dekorschicht 8 aus einer Haut aus einem thermoplastischen Polyolefin (TPO) oder einer Haut aus Polyvinylchlorid PVC oder Folie. Die Schaumschicht 7 kann aus PP Schaum und der Spritzgussträger aus PP bestehen.

In einer zweiten Variante besteht die Dekorschicht 8 aus einer Slushhaut, Sprühhaut oder Gießhaut. Die Schaumschicht kann aus Polyurethan (PUR) und der Spritzgussträger wiederum aus PP bestehen.

Anstatt des Spritzgussträgers kann auch eine Trägerschicht aus naturfaserverstärktem PP oder Holzfaserformstoff verwendet werden.

Der Bereich der Airbagabdeckung 2 in der Innenraumverkleidung 1 wird wie in Fig. 1 mit einer Verstärkung verschweißt oder verklebt. Diese Verstärkung kann aus denselben Schichten, wie in Fig. 1 beschrieben, aufgebaut sein, in dieser Fig. 2 ist die Variante dargestellt, in welcher auf die beidseitig angeordnete Verstärkungsschicht aus faserverstärktem PP 13 verzichtet wurde. Je nach Materialkombination und geometrischer Gestalt kann auf die Verstärkungsschicht 13 verzichtet werden, weil die Krafteinleitung in den Randbereich der Abdeckung bei ausreichender Festigkeit einer Schichtfolge gewährleistet ist. Für Materialkombinationen mit Trägerschichten aus wenig reißfesten Material können die Verstärkungsschichten 13 und 14 gänzlich entfallen. Durch das Vorhandensein der Verstärkung werden die Scherspannungen in den Verschwächungspunkten oder Sollbruchlinien schlagartig überwunden und es erfolgen ein exakter Anriss und Rissfortschritt.

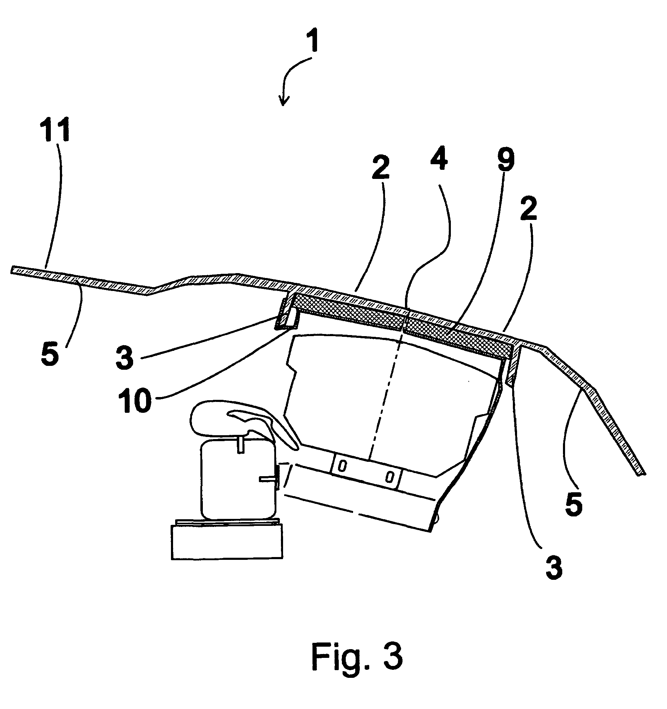

Fig. 3 ist ein Schnitt durch eine Airbagabdeckung in einer dritten Ausführungsform. Hier wird eine Möglichkeit der Verstärkung einer Abdeckung eines Spritzgussträgers dargestellt. Dieser Träger kann wiederum mit optionalen Dekorschichten oder Lackierungen versehen werden. In dieser Variante wird der Träger selbst durch eine Verschwächung 4 verschwächt, welche hier mittig angeordnet sein soll. Die Lage der Verschwächung und die sich daraus ergebende Anordnung der Verstärkung 9 oder der Verstärkungen 9 hat keinen Einfluss auf die Wirkungen der Erfindung, in der dargestellten Variante öffnen die in der Zeichnung linksseitige Abdeckung 2 mit ihrer Verstärkung 9 ungefähr spiegelgleich zu der in der Zeichnung dargestellten rechtsseitigen Abdeckung 2. An der Verstärkung 9 ist ebenfalls ein Gewebe 10 angebracht, welches entweder, wie linksseitig in der Zeichnung gezeigt, am Schusskanal angebracht sein kann oder wie rechtsseitig dargestellt, direkt auf dem Träger, an welchem der Airbagauslösemechanismus montiert ist.

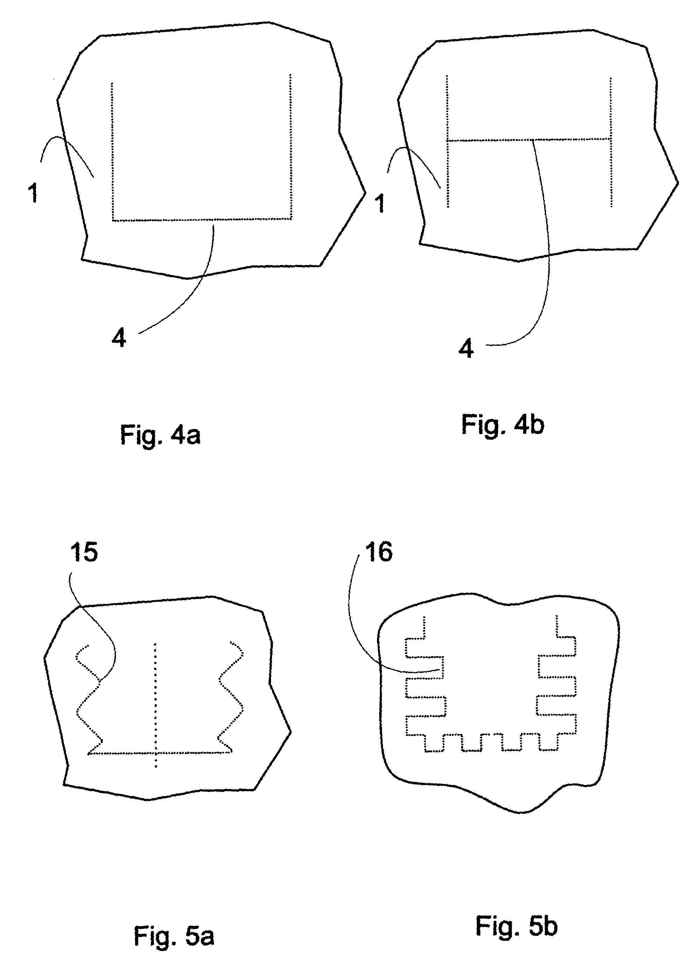

Fig. 4a und Fig. 4b stellen mögliche Varianten in der Geometrie der Verschwächung und der zugehörigen Verstärkungsschicht dar. Fig. 4a entspricht dann einer Ansicht, wie sie in Fig. 1 und im Schnitt dargestellt wurde. Die Verschwächungslinie umrahmt die in dieser Ansicht nicht sichtbare Verstärkung auf 3 Seiten. Die vierte Seite bleibt unverschwächt und unterstützt die Scharnierwirkung des Gewebes. Somit öffnet die Abdeckung wie eine Klappe. Fig.4b entspricht der in Fig. 3 dargestellten Schnittdarstellung. Hier werden 2 annähernd gleiche Abdeckungen vorgesehen, die ungefähr gegengleich öffnen.

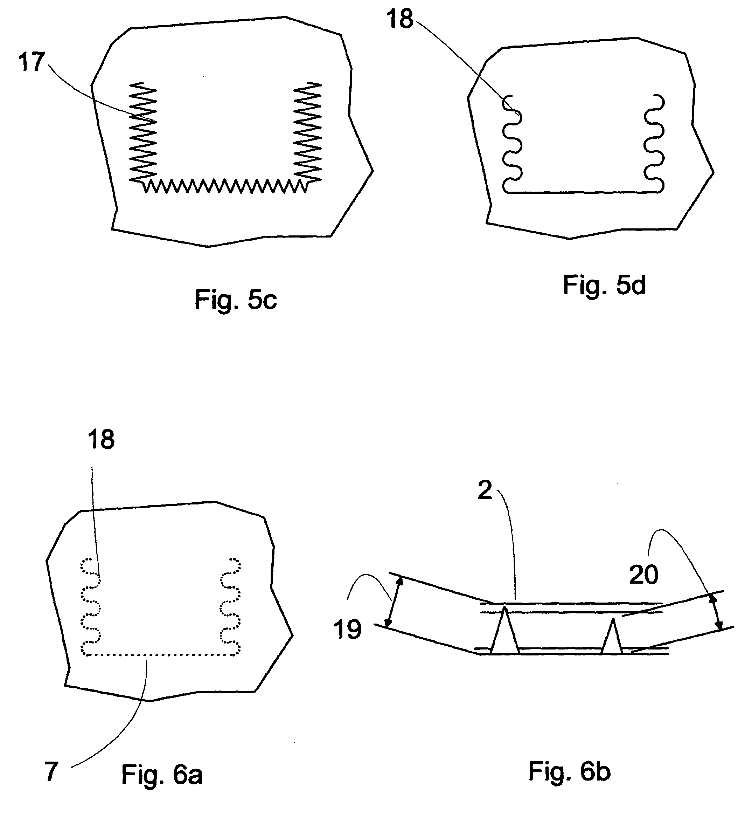

Fig. 5a bis Fig. 5d stellen weitere mögliche Varianten in der Geometrie der Verschwächungen dar. Bei Verwendung dieser Varianten im Verlauf der Verschwächungslinie kommt es zur gezielten Einleitung von örtlichen Spannungsspitzen. Im ersten Ausführungsbeispiel handelt es sich um die Wellentäler 15 der Klappe, im zweiten Ausführungsbeispiel um die Nuten 16 im dritten Ausführungsbeispiel um die Spitzen der Einschnitte 17 und im vierten Ausführungsbeispiel um die gegen die Mitte der Klappe gerichteten Kreisbögen 18. An diesen Stellen wird zuerst die für den Anriss notwendige Kraft aufgebracht. Sobald es zum Anriss gekommen ist, propagiert der Riss automatisch unter dem weiteren Druckaufbau des Luftsacks. Somit reicht bereits eine im Vergleich zum Stand der Technik geringere Perforation, um den begonnenen Anriss fortzusetzen. Zusätzlich kann die Perforationsdichte an verschiedenen Stellen der Schwächungszone unterschiedlich sein.

Die Anzahl der Perforationspunkte kann zumindest in den Bereichen, in denen ein bereits begonnener Riss sich fortsetzt, vermindert werden oder ganz entfallen.

Fig. 6a und Fig. 6b stellen Variationen der Anzahl der Verschwächungspunkte pro Längeneinheit oder Variationen der Eindringtiefe der Verschwächung dar. In Fig. 6a wird eine größere Anzahl von Verschwächungspunkten in den gegen die Abdeckung ausgerichteten Bögen angeordnet, damit die Spannungsspitzen sicher erreicht werden. Wenn man die Anzahl der Verschwächungspunkte gleich lässt, besteht noch die Möglichkeit die Eindringtiefe zu variieren. Wenn eine Dekorschicht vorgesehen ist, kann unter Anwendung von Kombinationen dieser Maßnahmen erreicht werden, dass die Dekorschicht nur wenig, wie in der Verschwächung 19 angegeben, oder gar nicht geschwächt zu werden braucht, wie in der Verschwächung 20 angegeben.

Es ist auch vorteilhaft, die Eindringtiefe der Perforationspunkte zu verringern, sodass in jedem Fall gewährleistet werden kann, dass es auch bei langjährigem Betrieb des Fahrzeugs nicht durch extreme klimatische Bedingungen oder durch Stöße auf die Luftsackklappe zu einer zumindest teilweisen Sichtbarkeit der Naht kommt.

### Bezugszeichenliste:

- 1.: Innenraumverkleidung (z.B. Instrumententafel)
- 2.: Airbagabdeckung
- 3.: Schusskanal
- 4.: Schwächungszone
- 5.: Kunststoffträger
- 6.: Austrittsbereich
- 7.: Schaumschicht
- 8.: Dekorschicht (Haut)
- 9.: Verstärkung der Airbagabdeckung
- 10.: Gewebe
- 11.: Innenraumverkleidungsbereich
- 12.: Kemschicht
- 13.: Verstärkungsschicht
- 14.: Verstärkungsschicht
- 15.: Wellental
- 16.: Nut
- 17.: Spitze
- 18.: Bogen
- 19.: Verschwächung von Dekorschicht und Träger
- 20.: Verschwächung des Trägers

## Patentansprüche

1. Kunststoffbauteil, für eine Innenverkleidung eines Fahrzeugs, welches eine Airbagabdeckung (2) enthält, wobei die Airbagabdeckung eine Verstärkung (9) aufweist, welche mittels einer gewebeartigen Struktur (10) an einem Schusskanal oder mit einer Fahrzeugrahmenkonstruktion verbunden ist, wobei die gewebeartige Struktur (10) als Scharnier dient und die Verstärkung (9) ein mehrschichtiges Kunststoffleichtbauteil ist, **gekennzeichnet dadurch, dass** die Verstärkung eine Sandwichstruktur aufweist, welche eine Kernschicht (12) und mindestens je eine Verstärkungsschicht (13,14) umfasst, wobei die Kernschicht (12) von den Verstärkungsschichten (13,14) beidseitig begrenzt wird.

2. Kunststoffbauteil mit Verstärkung nach Anspruch 1, **gekennzeichnet dadurch, dass** die Kernschicht (12), aus einem wabenförmigen Material besteht.

3. Kunststoffbauteil mit Verstärkung nach Anspruch 1, **gekennzeichnet dadurch, dass** die Kernschicht (12) aus Polypropylen und die Verstärkungsschichten (13,14) aus einem faserverstärkten Polypropylen bestehen.

4. Kunststoffbauteil mit Verstärkung nach einem der vorhergehenden Ansprüche, **gekennzeichnet dadurch, dass** das Kunststoffbauteil eine Kunststoffträgerschicht (5) enthält.

5. Kunststoffbauteil mit Verstärkung nach Anspruch 4, **gekennzeichnet dadurch, dass** die Kunststoffträgerschicht (5) aus expandiertem Polypropylen besteht.

6. Kunststoffbauteil mit Verstärkung nach Anspruch 4, **gekennzeichnet dadurch, dass** die Verstärkung (9) in die Kunststoffträgerschicht (5) eingebettet ist.

7. Kunststoffbauteil mit Verstärkung nach Anspruch 4, **gekennzeichnet dadurch, dass** die Verstärkung (9) mit der Kunststoffträgerschicht (5) verschweißt ist.

8. Kunststoffbauteil mit Verstärkung nach Anspruch 4, **gekennzeichnet dadurch, dass** die Verstärkung (9) mit der Kunststoffträgerschicht (5) verklebt oder verpresst ist.

9. Kunststoffbauteil mit Verstärkung nach Anspruch 4, **gekennzeichnet dadurch, dass** die Kunststoffträgerschicht (5) ein Spritzgussteil ist.

10. Kunststoffbauteil mit Verstärkung nach Anspruch 9, **gekennzeichnet dadurch, dass** auf der Kunststoffträgerschicht (5) eine Dekorschicht (8) vorgesehen ist.

11. Kunststoffbauteil mit Verstärkung nach Anspruch 9, **gekennzeichnet dadurch, dass** zwischen der Kunststoffträgerschicht (5) und der Dekorschicht (8) eine Schaumschicht (7) vorgesehen ist.

12. Kunststoffbauteil mit Verstärkung nach einem der vorhergehenden Ansprüche, **gekennzeichnet dadurch, dass** die Airbagabdeckung (2) von der Innenverkleidung mittels Verschwächungen (4) zumindest teilweise abgetrennt ist.

13. Kunststoffbauteil mit Verstärkung nach Anspruch 12, **gekennzeichnet dadurch, dass** die Verschwächung (4) im wesentlichen der Kontur der Verstärkung (9) folgt.

14. Kunststoffbauteil mit Verstärkung nach Anspruch 13, **gekennzeichnet dadurch, dass** die Verschwächung (4) zumindest die Dekorschicht (8) zumindest teilweise unberührt lässt.

## Claims

1. Polymer trim part for an interior trim panel of a vehicle, comprising an air bag cover (2), whereby the air bag cover comprises a reinforcement (9), which is connected by a woven structure (10) to a firing channel or a vehicle frame construction, whereby the woven structure (10) serves as a hinge and the reinforcement (9) is a multilayer lightweight polymer trim part, **characterized in that** the reinforcement comprises a sandwich structure, which comprises a core layer (12) and at least one reinforcing layer (13, 14) on either side, whereby the core layer (12) is delimited by the reinforcing layers (13,14) on both sides.

2. Polymer trim part with reinforcement according to claim 1, **characterized in that** the core layer (12) is made of alveolar material.

3. Polymer trim part with reinforcement according to claim 1, **characterized in that** the core layer (12) is made of polypropylene and the reinforcing layers (13,14) are made of a fiber-reinforced polypropylene.

4. Polymer trim part with reinforcement according to one of the preceding claims, **characterized in that** the polymer trim part comprises a polymer carrier layer (5).

5. Polymer trim part with reinforcement according to claim 4, **characterized in that** the polymer carrier layer (5) is made of expanded polypropylene.

6. Polymer trim part with reinforcement according to claim 4, **characterized in that** the reinforcement (9) is embedded in the polymer carrier layer (5).

7. Polymer trim part with reinforcement according to claim 4, **characterized in that** the reinforcement (9) is welded together with the polymer carrier layer (5).

8. Polymer trim part with reinforcement according to claim 4, **characterized in that** the reinforcement (9) is glued or pressed together with the polymer carrier layer (5).

9. Polymer trim part with reinforcement according to claim 4, **characterized in that** the polymer carrier layer (5) is an injection molded part.

10. Polymer trim part with reinforcement according to claim 9, **characterized in that** a decorative layer (8) is foreseen on the polymer carrier layer (5).

11. Polymer trim part with reinforcement according to claim 9, **characterized in that** a foam layer (7) is positioned between the decorative layer (8) and the polymer carrier layer (5).

12. Polymer trim part with reinforcement according to one of the preceding claims, **characterized in that** the air bag cover (2) is separated at least partially from the interior lining by weakening zones (4).

13. Polymer trim part with reinforcement according to claim 12, **characterized in that** the weakening zone (4) follows substantially the contour of the reinforcement (9).

14. Polymer trim part with reinforcement according to claim 13, **characterized in that** the weakening zone (4) leaves the decorative layer (8) at least partially intact.

## Revendications

1. Pièce polymérique pour une pièce d'équipement intérieur d'un véhicule, que contient un couvercle airbag (2), ce couvercle étant muni d'un renforcement (9), qui est relié par une structure de type textile (10) sur un canal de tir ou sur un élément de structure du véhicule, cette structure de type textile sert de charnière et le renforcement (9) est composé d'une pièce polymérique légère multicouches, **caractérisé en ce que** le renforcement est une structure sandwich, qui comprend une âme (12) et au moins une couche de renforcement (13,14) de chaque côté, et l'âme (12) est délimitée de chaque côté par ces couches de renforcement (13,14).

2. Pièce polymérique avec renforcement selon la revendication 1, **caractérisé en ce que** l'âme (12) est constitué d'un matériau alvéolaire.

3. Pièce polymérique avec renforcement selon la revendication 1, **caractérisé en ce que** l'âme (12) est constitué du polypropylène et les couches de renforcement (13,14) sont constitués d'un polypropylène renforcé avec des fibres.

4. Pièce polymérique avec renforcement selon une des revendications précédentes, **caractérisé en ce que** la pièce polymérique comprend une couche polymère structurelle (5).

5. Pièce polymérique avec renforcement selon la revendication 4, **caractérisé en ce que** la couche polymère structurelle (5) est constitué de polypropylène en forme de mousse comprenant des billes expansées.

6. Pièce polymérique avec renforcement selon la revendication 4, **caractérisé en ce que** le renforcement (9) est intégré dans la couche polymère structurelle (5).

7. Pièce polymérique avec renforcement selon la revendication 4, **caractérisé en ce que** le renforcement (9) est soudé avec la couche polymère structurelle (5).

8. Pièce polymérique avec renforcement selon la revendication 4, **caractérisé en ce que** le renforcement (9) est collé ou pressé avec la couche polymère structurelle (5).

9. Pièce polymérique avec renforcement selon la revendication 4, **caractérisé en ce que** la couche polymère structurelle (5) est une pièce moulée par injection.

10. Pièce polymérique avec renforcement selon la revendication 9, **caractérisé en ce que** le une couche décorative (8) est prévue sur la couche polymère structurelle (5).

11. Pièce polymérique avec renforcement selon la revendication 9, **caractérisé en ce que** le une couche de mousse (7) est prévue entre la couche polymère structurelle (5) et la couche décorative (8).

12. Pièce polymérique avec renforcement selon une des revendications précédentes, **caractérisé en ce que** le couvercle airbag (2) est séparé au minimum partiellement de son habillage intérieur par des affaiblissements (4).

13. Pièce polymérique avec renforcement selon la revendication 12, **caractérisé en ce que** l'affaiblissement (4) suit en général le contour du renforcement (9).

14. Pièce polymérique avec renforcement selon la revendication 13, **caractérisé en ce que** la l'affaiblissement (4) laisse la couche décorative (8) au moins partiellement intacte.
